Europäisches Patentamt

European Patent Office

Office européen des brevets

(11) Veröffentlichungsnummer: **0 248 987**
**B1**

(12) **EUROPÄISCHE PATENTSCHRIFT**

(45) Veröffentlichungstag der Patentschrift:
27.06.90

(21) Anmeldenummer: 87104490.5

(22) Anmeldetag: 26.03.87

(51) Int. Cl.⁵: **B01D 3/40**, A23F 5/48,
A23L 1/221

(54) Anreicherung von flüchtigen Verbindungen.

(30) Priorität: 15.05.86 DE 3616309

(43) Veröffentlichungstag der Anmeldung:
16.12.87 Patentblatt 87/51

(45) Bekanntmachung des Hinweises auf die Patenterteilung:
27.06.90 Patentblatt 90/26

(84) Benannte Vertragsstaaten:
CH DE FR IT LI

(56) Entgegenhaltungen:
CH-B- 341 383
DE-A- 2 431 445
DE-B- 2 148 863
DE-B- 2 436 130

VERFAHRENSTECHNIK, Band 8, Nr. 12, 1974,
Seiten 343-347; H. HACHENBERG et al.:
"Charakterisierung von Zusatzstoffen für
Extraktivdestillation durch die gaschromatographische
Dampfraummethode"

(73) Patentinhaber: Degussa Aktiengesellschaft,
Weissfrauenstrasse 9, D-6000 Frankfurt am Main 1(DE)

(72) Erfinder: Giesselmann, Günter, Dr.,
Gravenbrucherweg 17, D-6056 Heusenstamm(DE)
Erfinder: Hartmann, Andreas, Baumackerweg 1,
D-8752 Mömbris(DE)
Erfinder: Brückner, Karl-Heinz, Mühlweg 17,
D-8752 Mömbris(DE)

## Beschreibung

Eine neue Technik zur Anreicherung von flüchtigen Verbindungen aus diese enthaltenden festen oder flüssigen Substanzen wurde entwickelt. Die flüchtigen Verbindungen bilden vorzugsweise eine Gasphase, die im Gleichgewicht mit ihrer emittierenden Phase (flüssig oder fest) steht.

Aufgabe der Erfindung ist, ein Verfahren zur Vielfachanreicherung der flüchtigen Verbindungen aus diese emittierenden festen oder flüssigen Substanzen ohne Verwendung von Hilfsstoffen in einem geschlossenen System bereitzustellen.

Gefunden wurde ein Verfahren zur Anreicherung von flüchtigen Verbindungen aus diese enthaltenden festen oder flüssigen Substanzen durch Erhitzen der festen oder flüssigen Substanzen in einem Verdampfergefäß auf höhere Temperatur und nachfolgend Kondensieren der emittierten flüchtigen Verbindungen in einem Kondensationsgefäß bei tieferer Temperatur, das dadurch gekennzeichnet ist, daß die Behandlung in einem geschlossenen System durchgeführt wird, das aus dem Verdampfergefäß, dem Kondensationsgefäß und einer diese Gefäße verbindenden Kapillare mit einem Innendurchmesser von kleiner 1 mm besteht.

Die Kapillarlänge und der Kapillarinnendurchmesser müssen so gewählt werden, daß der Transport der flüchtigen Verbindungen nur in Richtung des zweiten, nicht belüfteten Behälters, der als Kondensationsgefäß dient, möglich ist; d.h., es darf keine Rückdiffusion eintreten. Hiernach richtet sich bei gegebenem Werkstoff und Länge der Kapillare deren Innendurchmesser. Dies läßt sich aber durch einen Handversuch feststellen.

Zum Beispiel zeigte sich bei Edelstahlkapillaren, daß das erfindungsgemäße Verfahren bei Innendurchmessern von 0,10 bis 0,5 mm problemlos durchführbar ist; besonders günstig war ein Innendurchmesser von 0,25 mm.

Der anzuwendende Innendurchmesser läßt sich bei diesem gegebenen Material leicht einen Handversuch feststellen, wie oben gesagt wurde.

Die in Frage kommende Materialien für die Kapillaren richten sich nach den chemischen Eigenschaften der anzureichernden flüchtigen Verbindungen; genannt seien Metalle, Glas oder Quarz, sowie Kunststoffe, wie z.B. Polyäthylene oder Polyfluoräthylene (Teflon).

Von Metallen sind besonders günstig Stähle, vor allem Edelstähle, Edelmetalle wie Platin, Gold und Silber; außerdem andere gut wärmeleitende Metalle, wie z.B. Kupfer oder Aluminium. Für Spezialzwecke können Titan, Zirkon, Tantal verwendet werden.

Alle diese Metalle lassen sich auch in Form ihrer Legierungen, z.B. Platin-Iridium, einsetzen.

Zur Unterstützung des Anreicherungsvorganges wird ein Temperaturgefälle zwischen dem Verdampfergefäß und Kondensationsgefäß aufrechterhalten. Die beiden im geschlossenen System vorhandenen Gefäße können aus denselben Materialien wie die Kapillare(n) bestehen, und zwar unabhängig von der Temperatur der zu extrahierenden Gasphase und den dabei auftretenden Stoffen.

Durch das erfindungsgemäße Verfahren ist der Anreicherungseffekt im Vergleich zu anderen Verfahren wesentlich erhöht. Die flüchtigen Verbindungen aus der Gasphase werden in den meisten Fällen um mehr als das Zehnfache in dem Kondensationsgefäß angereichert, und zwar in Form eines flüssigen oder festen Kondensates.

Ein weiterer technischer Fortschritt des erfindungsgemäßen Verfahrens ist die Tatsache, daß — da in einem geschlossenen System gearbeitet wird — kein Substanzverlust möglich ist. Verunreinigungen durch Fremdsubstanzen sind ausgeschlossen, da für die Anreicherung der flüchtigen Verbindungen keinerlei Hilfsstoffe verwendet werden. Ferner zeigte sich, daß die leichtflüchtigen Verbindungen bei richtig ausgewähltem Kapillarinnendurchmesser mit Geschwindigkeiten von größer als 30 cm/s die Kapillare passieren und anschließend kondensiert werden.

Dies ist z.B. der Fall, wenn eine Stahlkapillare mit einem Innendurchmesser von 0,25 mm eingesetzt wird. Aus einem Gasvolumen von 5ml erhält man z.B. mit dieser Anordnung in 3 Stunden 100 bis 200 mg kondensierte Bestandteile.

Das erfindungsgemäße Verfahren eignet sich auf Grund seiner einfachen Handhabung, sowie der Reinheit der erhaltenen Produkte zur Isolierung von flüchtigen Verbindungen, wie sie beispielsweise in der Duftstoffindustrie, Aromaforschung, kosmetischen Industrie gefordert werden, sowie zur Isolierung flüchtiger Substanzen aus pharmazeutischen Produkten, Produkten der Nahrungsmittelindustrie, aus Pflanzenextrakten, Pestiziden und für analytische Zwecke, z.B. der Head Space-Analyse in Verbindung mit der Gaschromatographie und HPLC (high performance liquid chromatography).

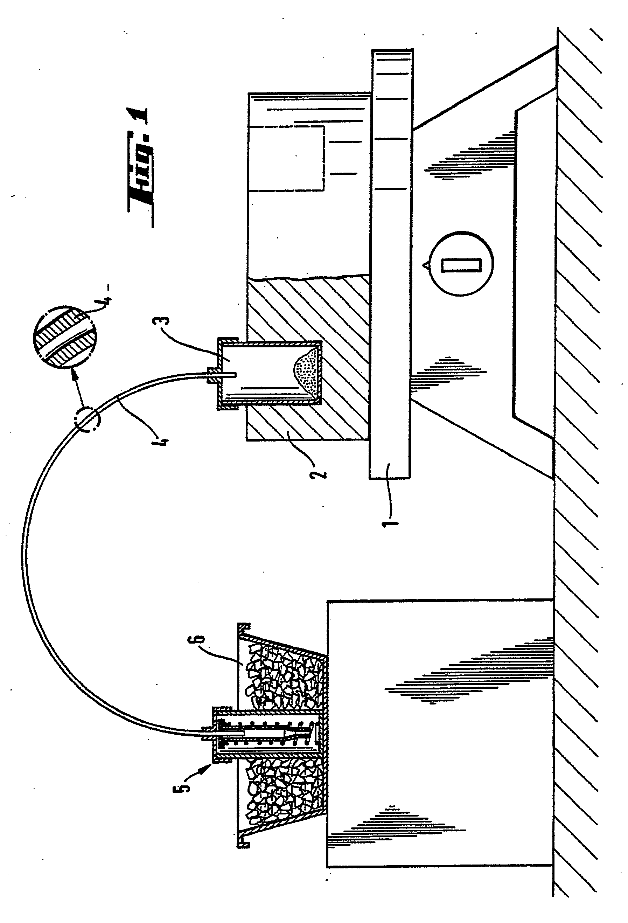

Eine schematische, beispielhafte Anordnung ist in Abbildung 1 dargestellt: Das Verdampfergefäß 3 befindet sich in einem heizbaren Block 2 auf einer Heizplatte 1; das Kondensationsgefäß 5 ist von einem Kühlgefäß 6 umgeben; die Kapillare 4 leitet den Gastransport von Gefäß 3 zu dem Kondensationsgefäß 5.

Die Erfindung wird in den nachfolgenden Beispielen näher erläutert, bei denen die Anordnug entsprechend Abbildung 1 eingesetzt wurde.

Beispiel 1

Anreicherung von flüchtigen Bestandteilen aus Knoblauch.

1,25 g zerkleinerter, frischer Knoblauch wird in einem druckstabilen Borosilikatglas von 10 ml Inhalt eingewogen. Das zugebördelte Glas mit dem Knoblauch wird mit einer ebenfalls druckstabilen Borosilikat-Vorlage mittels einer 150 mm langen Edelstahlkapillare mit 0,25mm Innendurchmesser verbunden. Das Glas mit dem Knoblauch wird in einem Aluminiumblock auf 80°C erhitzt und die Vorlage mit Eis gekühlt. Nach 3 Stunden kommt der Vorgang zum Stillstand, und die Vorlage enthält eine Kondensatmenge von 102 mg. Ersetzt man die erste Vorlage durch eine zweite, so setzt sich der Anreicherungsprozeß erneut in Gang, und nach 3 weiteren Stunden erhält man eine Kondensatmenge von 120 mg. Dieser Vorgang läßt sich so oft wiederholen, wie noch flüchtige Verbindungen nachgebildet werden.

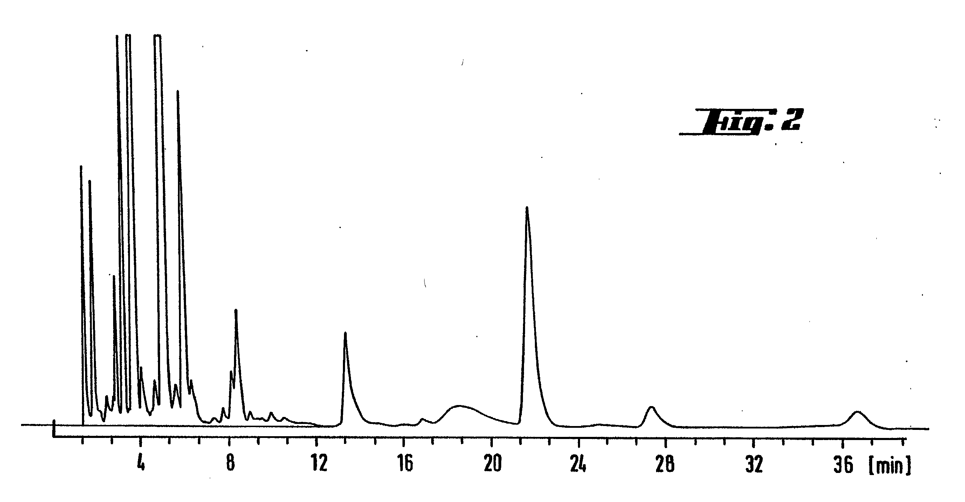

Die Abbildung 2 zeigt ein HPLC (high performance liquid Chromatogramm) der Zusammensetzung des Kondensats, welches nach den ersten 3 Stunden gewonnen wurde.

Als analytische Trennsäule wurde in Beispiel 1 und 2 eine RP-18-Säule mit einer Partikelgröße von 7 µm verwendet. Sie war 250 mm lang, der Innendurchmesser betrug 5 mm. Gearbeitet wurde bei 40°C, die Eluentzusammensetzung war Wasser: Acetonitril (50 : 45); der Fluß betrug 1,5 ml/min; UV-Detektion bei 210 nm.

Beispiel 2

Anreicherung von flüchtigen Verbindungen aus Rotwein Sorte "Bordeaux" (Frankreich).

5 ml Rotwein wurden entsprechend Beispiel 1 in ein druckstabiles Glas eingewogen, zugebördelt und mittels einer 150 mm langen Edelstahlkapillare von 0,25 mm Innendurchmesser mit einer Vorlage verbunden. Das Glas mit dem Rotwein wird im Aluminiumblock auf 70 °C erwärmt und die Vorlage im Eisbad gekühlt. Nach 3 Stunden kommt der Anreicherungsprozeß zum Stillstand, und man erhält 120 mg Kondensat.

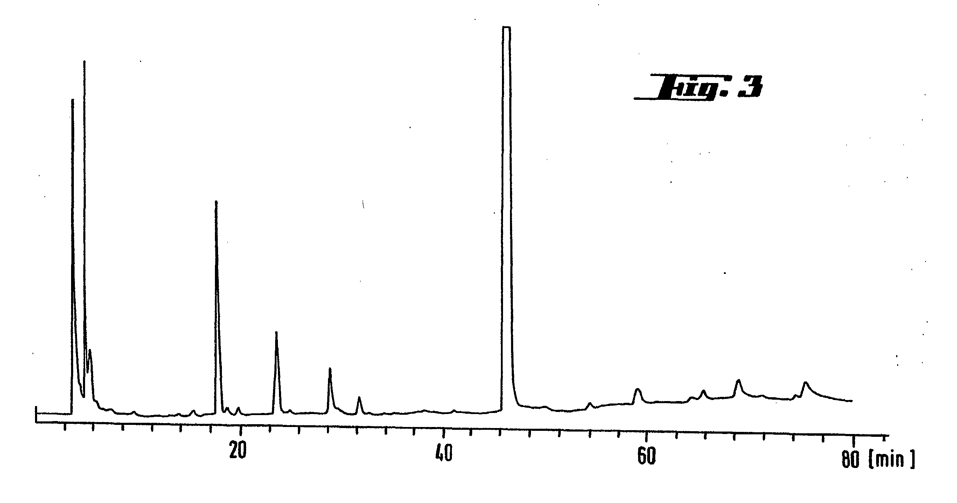

Abbildung 3 zeigt das HPLC Chromatogramm von flüchtigen Substanzen aus "Bordeaux" Rotwein.

Beispiel 3

Aromastoffe aus Kaffee (gemahlen).

1,5 g gemahlener Kaffee wird, wie in Beispiel 1 beschrieben, in einem druckstabilen Glas auf 110 °C erhitzt und die Vorlage im Eisbad gekühlt. Nach 3 Stunden enthält die Vorlage eine Kondensatmenge von 80 mg Aromastoffen.

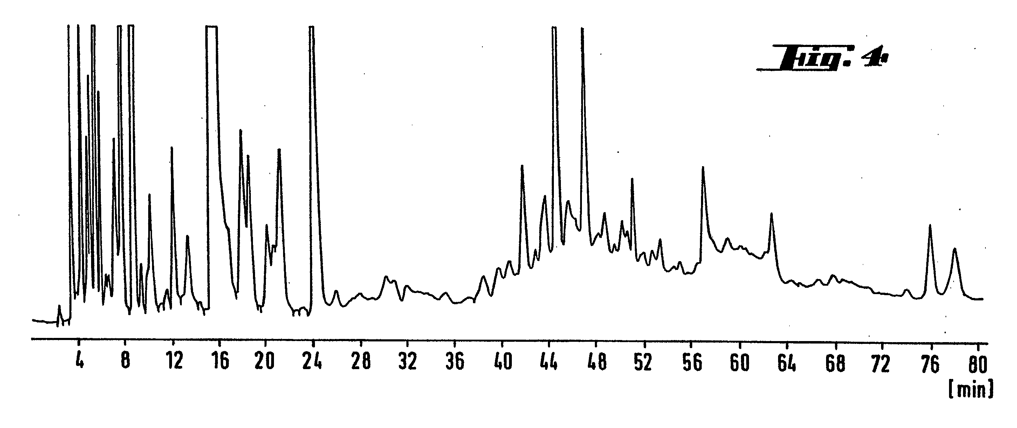

Abbildung 4 zeigt das HPLC Chromatogramm der Aromastoffe von gemahlenem Kaffee.

Die analytische Trennsäule war die gleiche wie in Beispiel 1 und 2. Gearbeitet wurde bei 25 °C mit zwei Eluenten:

Eluent A - Zusammensetzung war 0,2 m $H_3PO_4$ - Acetonitril (98 : 2)

Eluent B - Zusammensetzung war 0,2 m $H_3PO_4$ - Acetonitril (50 : 50)

Gradient:
0 bis 60 Minuten mit 0 - 50 % B
60 bis 75 Minuten mit 50 % B
75. Minute mit 0 % B
75 bis 90 Minuten mit 0 % B.
Der Fluß war 1,0 ml/min; UV-Detektion bei 210 nm.

Patentansprüche

1. Verfahren zur Anreicherung von flüchtigen Verbindungen aus diese enthaltenden festen oder flüssigen Substanzen durch Erhitzen der festen oder flüssigen Substanzen in einem Verdampfergefäß auf höhere Temperatur und nachfolgend Kondensieren der emittierten flüchtigen Verbindungen in einem Kondensationsgefäß bei tieferer Temperatur, dadurch gekennzeichnet, daß die Behandlung in einem geschlossenen System durchgeführt wird, das aus dem Verdampfergefäß, dem Kondensationsgefäß und einer diese Gefäße verbindenden Kapillare mit einem Innendurchmesser von kleiner 1mm besteht.

2. Verfahren nach Anspruch 1, dadurch gekennzeichnet, daß man eine Kapillare aus Metallen, Glas, Quarz oder Kunststoffen verwendet.

3. Verfahren nach Anspruch 2, dadurch gekennzeichnet, daß man eine Kapillare aus Edelstahl, Edelmetall oder einem anderen gut wärmeleitenden Metall verwendet.

4. Verfahren nach Anspruch 1 bis 3, dadurch gekennzeichnet, daß man Kapillaren mit einem Innendurchmesser von 0,10 bis 0,50 mm verwendet.

5. Verfahren nach den Ansprüchen 3 und 4, dadurch gekennzeichnet, daß man eine Edelstahlkapillare mit einem Innendurchmesser von 0,25 mm verwendet.

Claims

1. A process for enriching volatile compounds from solid or liquid substances containing them by heating the solid or liquid substances to a relatively high temperature in an evaporator vessel and condensing the volatile compounds emitted at relatively low temperature in a condensation vessel, characterized in that the treatment is carried out in a closed system consisting of the evaporator vessel, the condensation vessel and a capillary with an internal diameter of less than 1mm connecting these vessels.

2. A process as claimed in claim 1, characterized in that a capillary of metals, glass, quartz or plastics is used.

3. A process as claimed in claim 2, characterized in that a capillary of stainless steel, noble metal or other metal of high thermal conductivity is used.

4. A process as claimed in claims 1 to 3, characterized in that capillaries with an internal diameter of 0,10 to 0,50 mm are used.

5. A process as claimed in claims 3 and 4, characterized in that a stainless steel capillary with an internal diameter of 0,25 mm is used.

Revendications

1. Procédé pour la concentration de composés volatils à partir de substances solides ou liquides les contenant, par chauffage des substances solides ou liquides à une température relativement élevée dans un récipient d'évaporation et condensation subséquente des composés volatils libérés, dans un récipient de condensation à une température plus basse, caractérisé en ce que l'on effectue le traitement dans un système clos qui est constitué du récipient d'évaporation, du récipient de condensation et d'un capillaire ayant un diamètre interne de moins de 1mm, reliant ces récipients.

2. Procédé selon la revendication 1, caractérisé en ce que l'on utilise un capillaire en métal, verre, quartz ou matière plastique.

3. Procédé selon la revendication 2, caractérisé en ce que l'on utilise un capillaire en acier spécial, en métal noble ou en un autre métal bon conducteur de la chaleur.

4. Procédé selon l'une quelconque des revendications 1 à 3, caractérisé en ce que l'on utilise des capillaires ayant un diamètre interne de 0,10 à 0,50 mm.

5. Procédé selon les revendications 3 et 4, caractérisé en ce que l'on utilise un capillaire en acier spécial ayant un diamètre interne de 0,25 mm.

Fig. 1

Fig. 2

Fig. 3

EP 0 248 987 B1

Fig. 4